# EUROPEAN PATENT APPLICATION

(11) **EP 4 178 024 A1**
(43) Date of publication of application: **10.05.2023**
(21) Application number: 21869518.7
(22) Date of filing: 12.07.2021
(51) Int. Cl.: H01M 50/502, H02G 5/10, H02G 5/00, H01R 13/03, B23K 1/00, H01M 10/6553

(54) **BUSBAR HAVING EXCELLENT HEAT DISSIPATION PERFORMANCE**

(30) Priority: 17.09.2020 KR 20200119917
(71) Applicant: LG Energy Solution, Ltd., Seoul 07335 (KR)
(72) Inventor: HWANG, Sung-Tack, Daejeon 34122 (KR); LEE, Won-Tae, Daejeon 34122 (KR)
(74) Representative: Hoffmann Eitle
(86) International application number: PCT/KR2021/008888
(87) International publication number: WO 2022/059894

(57) **Abstract**

Provided is a bus bar including a bar-shaped conductor for electrically connecting battery modules or electric parts to each other, the bus bar having a three-dimensional lattice structure to allow air ventilation and including a plurality of ventilation holes provided in a body of the bus bar. In detail, the body of the bus bar may be provided in a bar shape having a predetermined length, thickness, and width, and the plurality of ventilation holes may be provided in an upper surface, lower surface, left side surface, right side surface, front surface, and back surface of the body and provided to communicate with each other through an inner portion of the body.

## Description

### TECHNICAL FIELD

The present disclosure relates to a bus bar, and more particularly, to a bus bar having a heat dissipation structure via which heat generated during application of a high current may be effectively dissipated into the atmosphere.

The present application claims priority to Korean Patent Application No. 10-2020-0119917 filed on September 17, 2020 in the Republic of Korea, the disclosure of which is incorporated herein by reference.

### BACKGROUND ART

Examples of currently commercialized secondary batteries include a nickel cadmium battery, a nickel hydrogen battery, a nickel zinc battery, a lithium secondary battery, and among these, the lithium secondary battery hardly have memory effect compared to nickel-based secondary batteries, has a low self-discharge rate and high energy density, and is thus popular for these advantages.

Recently, secondary batteries are used not only in compact devices such as portable electronic devices but also in middle-to-large sized devices such as electric vehicles or energy storage systems (ESS). For example, when used in electric vehicles, a battery pack is configured by connecting large number of battery modules in each of which numerous secondary batteries are electrically connected to each other to increase the energy capacity and output.

To connect the battery modules or connect electric parts, cables or bus bars are used.

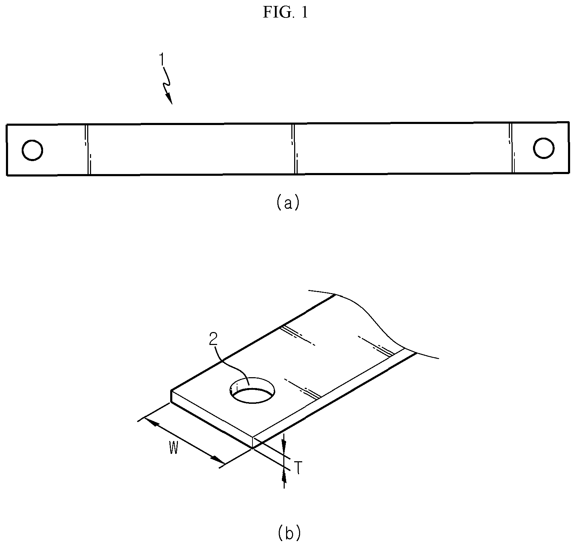

Resistance loss is low when a current flows through a conductor having a relatively large cross-section, and thus voltage drop due to the conductor is small in such a case. That is, the cross-section of a conductor affects voltage drop, and the effect thereof increases the higher a current is. A bus bar 1, however, is manufactured by using a copper or aluminum material having high electric conductivity, and is formed in a bar shape having a bolt-coupling hole 2 at both ends thereof, as illustrated in FIG. 1. The bus bar 1 has a larger cross-section through which a current may pass, as compared to a coated cable, and thus has low impedance and a high current capacity and is easy to install in a narrow space. Accordingly, a bus bar is used more effectively than a cable in a battery pack through which a high current flows and which has a narrow space.

The bus bar may be classified into flexible bus bars and rigid bus bars. For varying vibration axes or complicated paths, flexible bus bars are used, and for relatively short or simple paths, rigid bus bars are frequently used.

A cross-section of a bus bar may also be determined by, in addition to by an allowable amount of current, heat generated when a current flows and temperature of the ambient environment in which the bus bar is to be used. That is, in respect of electrical quality, even when the cross-section of a bus bar is sufficient, the cross-section may have to be additionally increased considering heat generated when a high current flows or temperature inside a sealed battery pack or heat generated in electric parts in the surroundings. This is to reduce heat generation of the bus bar by facilitating heat dissipation from a surface of the bus bar into the atmosphere.

However, to increase the heat dissipation area of the bus bar (see FIG. 1), increasing a width W or a thickness T of the bus bar not only increases the material cost of the bus bar but also has an adverse effect on the lightweight and compact size of a battery pack. Thus, there is a need for a method not to increase the width or thickness of a bus bar by no more than necessary but improve the heat dissipation performance.

### DISCLOSURE

### Technical Problem

The present disclosure is designed to solve the problems of the related art, and therefore the present disclosure is directed to providing a bus bar whereby heat dissipation performance may be increased without increasing the width or thickness of the bus bar by no more than necessary, and a method of manufacturing the bus bar.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a bus bar including a bar-shaped conductor for electrically connecting battery modules or electric parts to each other, the bus bar having a three-dimensional lattice structure to allow air ventilation and including a plurality of ventilation holes provided in a body of the bus bar.

The body may be provided in a bar shape having a predetermined length, thickness, and width, and the plurality of ventilation holes may be provided in an upper surface, lower surface, left side surface, right side surface, front surface, and back surface of the body and provided to communicate with each other through an inner portion of the body.

The body may include: a plurality of lengthwise plates arranged side by side with a predetermined interval between each other; and a plurality of widthwise plates arranged in a direction crossing the plurality of lengthwise plates and side by side with a predetermined interval between each other, wherein the plurality of ventilation holes are formed by alternately repeatedly stacking the plurality of lengthwise plates and the plurality of widthwise plates in a vertical direction.

At least one of the plurality of lengthwise plates and the widthwise plates may be plated with silver (Ag).

Each of the plurality of lengthwise plates may be formed of a non-plated copper plate, and each of the plurality of widthwise plates may be formed of a copper plate having both sides plated with silver (Ag).

The plurality of lengthwise plates and the plurality of widthwise plates may be welded by brazing welding.

In another aspect of the present disclosure, there is provided a method of manufacturing a bus bar, the method including: preparing a material including a plurality of lengthwise plates having the same length as a length of the bus bar and a plurality of widthwise plates having the same length as a width of the bus bar; forming a bus bar unit layer by arranging the plurality of lengthwise plates side by side with a predetermined interval therebetween, and stacking the plurality of widthwise plates on the plurality of lengthwise plates side by side with a predetermined interval therebetween in a direction crossing the plurality of lengthwise plates; forming a bus bar multi-layer by repeatedly stacking the bus bar unit layer a preset number of times; and welding the bus bar multi-layer to integrate the bus bar multi-layer into a single body.

The method may further include a hole processing operation of forming holes at both ends of the bus bar in a thickness direction after the welding.

The lengthwise plates may include a non-plated copper plate, and the widthwise plates may include a silver (Ag)-plated copper layer, and in the welding, brazing welding may be performed, in which the bus bar multi-layer is integrated into a single body by melting a silver component of the widthwise plates without using an additional filler metal.

In another aspect of the present disclosure, there is provided a battery pack including the bus bar described above.

### Advantageous Effects

According to an aspect of the present disclosure, a bus bar having improved heat dissipation performance as compared to the related art may be provided.

The bus bar according to the present disclosure includes ventilation holes that may contact the atmosphere, between lengthwise plates and widthwise plates constituting a lattice structure. External air may pass through a body of the bus bar through the ventilation holes in all directions including vertical, horizontal, forward and backward directions. That is, according to the bus bar according to the present disclosure, the external air may contact not only the external surface of the bus bar but also the inner side of the bus bar, thereby improving the heat dissipation performance.

According to another aspect of the present disclosure, a bus bar formed by stacking lengthwise plates and widthwise plates in a lattice structure and fixing the lengthwise and widthwise plates by brazing welding may be provided. Here, by silver plating at least one of the lengthwise plates or the widthwise plates, an additional filler metal is not necessary during brazing welding, and electrical conductivity of the bus bar may be improved.

The effects of the present disclosure are not limited to the above-described effects, and effects not mentioned will be clearly understood by those of ordinary skill in the art to which the present disclosure belongs from the present specification and accompanying drawings.

### DESCRIPTION OF DRAWINGS

FIG. 1 is a diagram illustrating a bus bar according to the related art of the present disclosure.
FIG. 2 is a perspective view of a bus bar according to an embodiment of the present disclosure.
FIG. 3 is an enlarged perspective view of region A of FIG. 2.
FIG. 4 illustrates a plan view and a partial enlarged view of the bus bar of FIG. 2.
FIG. 5 illustrates lengthwise plates and widthwise plates according to an embodiment of the present disclosure.
FIG. 6 illustrates a bus bar unit layer formed by stacking the lengthwise plates and the widthwise plates of FIG. 1 once.
FIG. 7 illustrates a bus bar multi-layer including multiple bus bar unit layers of FIG. 6.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations disclosed in the preferred embodiments and drawings of the present specification are examples of preferred embodiments of the present disclosure, and thus it should be understood that there can be alternative equivalents or modification examples that can replace the preferred embodiments at the point of the filing of the present application.

The embodiments of the present disclosure are provided so that this disclosure will be thorough and complete, and will fully convey the present disclosure to one of ordinary skill in the art. In the drawings, shapes and sizes of components may be exaggerated or omitted or schematically illustrated for clear description. Thus, the size or ratio of each constituent element does not perfectly reflect an actual size.

A bus bar described below may be used inside a battery pack, for example, to connect battery modules or to connect a relay device constituting a battery disconnection unit (BDU) to an internal terminal of a battery module. The bus bar may also be employed in power distribution boxes of other electronic and electric devices, systems, buildings using large power than battery packs, systems, or buildings.

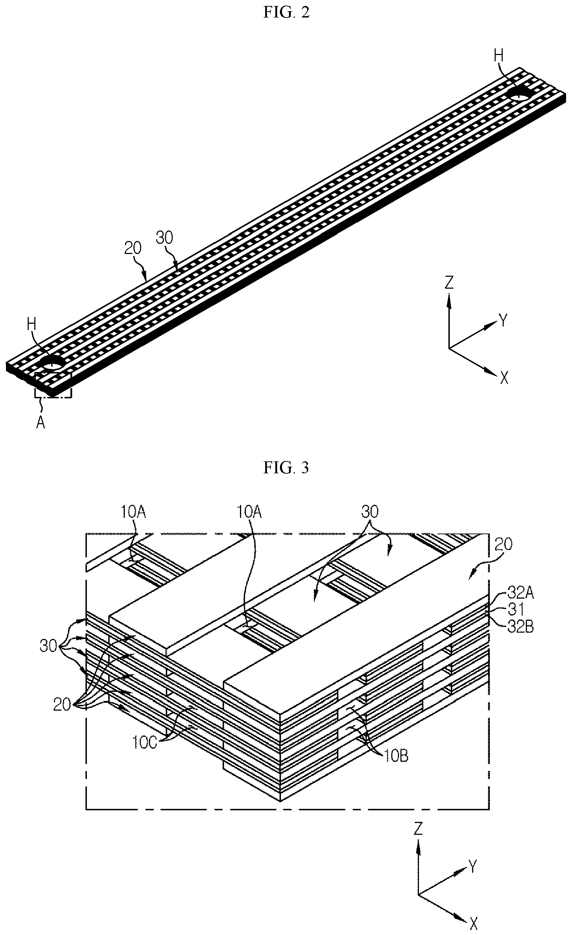

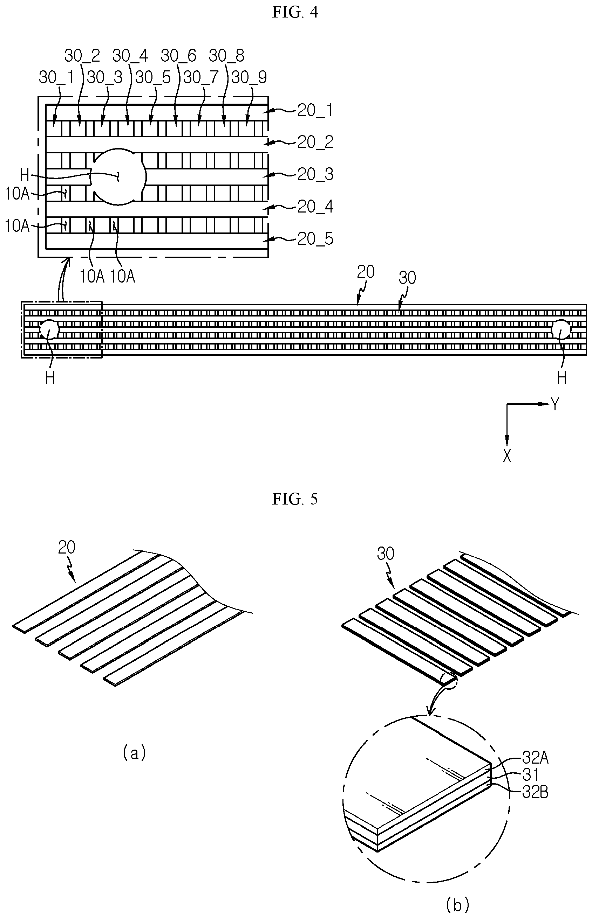

FIG. 2 is a perspective view of a bus bar according to an embodiment of the present disclosure. FIG. 3 is an enlarged perspective view of region A of FIG. 2. FIG. 4 illustrates a plan view and a partial enlarged view of the bus bar of FIG. 2.

A configuration of the bus bar according to an embodiment of the present disclosure will be described in detail with reference to FIGS. 2 through 4.

The bus bar according to an embodiment of the present disclosure has a basic shape of a bar formed of a metal material having high electric conductivity, and includes a plurality of ventilation holes 10A, 10B, and 10C in a body thereof.

The body of the bus bar is formed of a plurality of lengthwise plates 20 and a plurality of widthwise plates 30, which will be described later, and may be provided in a straight rectangular bar shape having a predetermined length, thickness, and width. For reference, the body of the bus bar in the straight rectangular bar shape described above is an example. That is, the body shape of the bus bar to which the technical idea of the present disclosure may be applied is not limited to the straight rectangular bar shape. That is, the body shape of the bus bar may be provided in other shapes, such as a bar shape bent in multiple directions.

The plurality of ventilation holes 10A, 10B, and 10C may be provided over the entire area of the body of the bus bar. For example, the body of the bus bar may have a three-dimensional lattice structure, and the plurality of ventilation holes 10A, 10B, and 10C may be formed in all of an upper surface, lower surface, left side surface, right side surface, front surface, and rear surface of the body of the bus bar, and each of the ventilation holes 10A, 10B, and 10C may communicate with each other inside the body of the bus bar.

According to this configuration, external air may pass through the body of the bus bar in all directions including vertical, horizontal, forward and backward directions through the plurality of ventilation holes 10A, 10B, and 10C. Therefore, air may contact not only the external surface of the bus bar according to the present disclosure the inner space of the bus bar, and thus, the heat dissipation performance thereof is better than that of the bus bar according to the related art.

In addition, the bus bar according to the present disclosure is lighter than a bar-shaped bus bar according to the related art (refer to FIG. 1) of the same size, and is thus suitable for reducing the weight of a battery pack. In other words, even if the weight of one bus bar is not much, tens to hundreds of bus bars may be accommodated in a battery pack, and in that case, the total weight of the tens to hundreds of bus bars causes an increase in the weight of a battery pack. Thus, it is desirable that a bus bar to be used for a battery pack is lightweight as well as excellent in electrical quality and heat dissipation. The bus bar according to the present disclosure satisfies all of the above-described conditions.

Next, the configuration of the bus bar constituting a three-dimensional lattice structure will be described in detail.

Referring to FIG. 2, the body of the bus bar includes the plurality of lengthwise plates 20 and the plurality of widthwise plates 30. Each lengthwise plate 20 may be formed of a non-plated copper plate and may be provided in the form of a band extending as long as the length of the bus bar (Y-axis direction). In addition, each widthwise plate 30 may be formed of a silver (Ag)-plated copper plate and may be provided in the form of a band extending as long as the width of the bus bar (X-axis direction).

In particular, as illustrated in FIG. 3, the widthwise plates 30 according to the present embodiment include a copper plate layer 31 and silver plating layers 32A and 32B on upper and lower portions of the copper plate layer 31, respectively. As will be described later, the silver plating layers 32A and 32B replace a filler metal during brazing welding and contribute to the improvement of the electrical conductivity of the bus bar.

Referring to FIG. 4, the plurality of lengthwise plates 20_1, 20_2, 20_3, 20_4, and 20_5 may be arranged to extend in a length direction of the bus bar (Y-axis direction) side by side with a predetermined interval therebetween, and the plurality of the widthwise plates 30_1, 30_2, ... 30_N may be arranged in a direction (X-axis direction) crossing the plurality of lengthwise plates 20_1, 20_2, 20_3, 20_4, and 20_5, and arranged side by side at a predetermined interval from each other. That is, as each lengthwise plate 20_1, 20_2, 20_3, 20_4, and 20_5 and each widthwise plate 30_1, 30_2 ... 30_N cross each other and are spaced apart from each other to form a lattice structure, the ventilation holes 10A may be provided between each lengthwise plate 20_1, 20_2, 20_3, 20_4, and 20_5 and each widthwise plate 30_1, 30_2, ... 30_N.

The plurality of lengthwise plates 20_1, 20_2, 20_3, 20_4, and 20_5 and the plurality of widthwise plates 30_1, 30_2, ... 30_N may be alternately stacked with each other in a vertical direction to form a three-dimensional lattice structure.

Referring back to FIGS. 3 and 4, in the bus bar according to the present embodiment, five lengthwise plates 20 are arranged at equal intervals along a width direction of the bus bar (X-axis direction) in a lowest layer, and 67 widthwise plates 30 are arranged on the lengthwise plates 20 at equal intervals along the length direction of the bus bar (Y-axis direction). Then, another five lengthwise plates 20 are arranged on the above widthwise plates at equal intervals along the width direction of the bus bar (X-axis direction), and another 67 widthwise plates 30 are arranged thereon at equal intervals in the length direction of the bus bar (Y-axis direction). According to the above-described pattern, five lengthwise plates 20 are stacked five times, and 67 widthwise plates 30 are stacked between the lengthwise plates 20 four times. Here, the five lengthwise plates 20 are located on first, third, fifth, seventh, and ninth layers, respectively, and the 67 widthwise plates 30 are located on second, fourth, sixth, and eighth layers, respectively, thereby forming a stacked structure having a three-dimensional lattice structure including a total of nine layers.

As the body of the bus bar is formed of a stacked structure having a three-dimensional lattice structure as above, empty spaces are provided between the lengthwise plates 20 and the widthwise plates 30 of each layer, and the empty spaces may be provided as the ventilation holes 10A, 10B, and 10C. These ventilation holes 10A, 10B, and 10C are regularly provided in the body of the bus bar at predetermined intervals in up, down, left, right, front, and rear directions and communicate with each other inside the body of the bus bar.

The above-described bus bar has a large heat dissipation area that can come into contact with the atmosphere, and has a structure in which the ventilation holes 10A, 10B, and 10C communicate with each other inside the bus bar, and thus, it may be deemed that the bus bar has better heat dissipation effect than the bus bar according to the related art. In particular, in an environment where there is a cooling fan around the bus bar to provide cooling air to the bus bar, the cooling air may be passed into and out of the body of the bus bar through the ventilation holes 10A, 10B, and 10C, thereby quickly blocking heat generation of the bus bar.

While the stacked structure including nine layers is formed by repeatedly stacking the lengthwise plates 20 and the widthwise plates 30 in the present embodiment, the number of layers of the stacked structure may be varied according to a desired thickness of the bus bar or a cross-section SQ of the bus bar. For example, when the plurality of lengthwise plates 20 are stacked N times and the plurality of widthwise plates 30 are stacked M times, in the above-described manner, a stacked structure having a three-dimensional lattice structure in which the plurality of lengthwise plates 20 are located on a first layer, third layer, ... 2N-1th layer, respectively, and the plurality of widthwise plates 30 are located on a second layer, fourth layer, ..., and 2Mth layer, respectively, may be provided.

A method of manufacturing a bus bar according to an embodiment of the present disclosure will be described in detail with reference to FIGS. 5 through 7.

First, the plurality of lengthwise plates 20 and the plurality of widthwise plates 30 are prepared by processing a metal material having high electrical conductivity.

A length of the bus bar may be determined by a length of the lengthwise plate 20, a width of the bus bar may be determined by a length of the widthwise plate 30, and a thickness of the bus bar may be determined by the number of times of stacking the lengthwise plates 20 and the widthwise plates 30. Thus, in consideration of the above, lengthwise plates 20 having a length corresponding to a preset length of the bus bar and widthwise plates 30 having a length corresponding to a preset width of the bus bar are prepared.

At least one of the lengthwise plates 20 and the widthwise plates 30 is plated with silver (Ag). In the present embodiment, as illustrated in (b) of FIG. 5, both sides of each widthwise plate 30 is silver-plated. That is, each widthwise plate 30 of the present embodiment includes a copper plate layer 31 and the silver plating layers 32A and 32B on upper and lower surfaces of the copper plate layer 31, respectively.

A non-plated copper plate layer of each lengthwise plate 20 and the copper plate layer 31 of each widthwise plate 30 are manufactured to have a thickness of about 0.2 mm to 0.25 mm, and the upper silver plating layer 32A and the lower silver plating layer 32B may be each manufactured to have a thickness of 0.05 mm.

The silver plating layers 32A and 32B may be melted during brazing welding and used to integrally connect the lengthwise plates 20 and the widthwise plates 30.

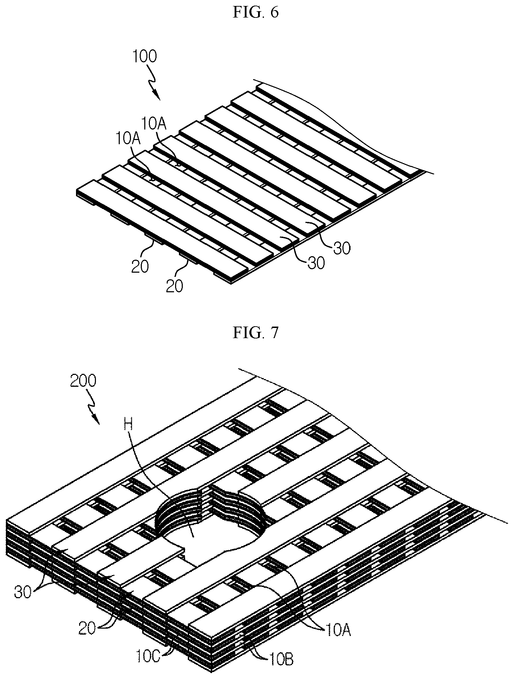

Then, as illustrated in FIG. 6, a plurality of lengthwise plates 20 are arranged side by side at a predetermined interval, and a plurality of widthwise plates 30 are arranged on the lengthwise plates 20 side by side with a predetermined interval therebetween in a direction crossing the plurality of lengthwise plates 20. Hereinafter, as illustrated in FIG. 6, a plurality of lengthwise plates 20 and a plurality of widthwise plates 30 stacked once in a lattice structure will be defined as a bus bar unit layer 100.

Then, the bus bar unit layer 100 is repeatedly stacked a preset number of times to form a bus bar multi-layer 200 as shown in FIG. 7.

Then, the lengthwise plates 20 and the widthwise plates 30 forming the bus bar multi-layer 200 are welded to be integrated into a single body. The welding may include ultrasonic welding, resistance welding, brazing welding, and the like. In the present embodiment, the lengthwise plates 20 and the widthwise plates 30 are connected by brazing welding, which is a welding method in which a base material is not melted.

Here, each widthwise plate 30 is provided with the silver (Ag) plating layers 32A and 32B, and thus, a separate filler metal is not required during brazing welding. Silver (Ag) is a metal having a lower melting point than copper (Cu), and thus, heat that is sufficient to melt the silver plating layers 32A and 32B of each widthwise plate 30 may be applied to the bus bar multi-layer 200 to melt the silver plating layers 32A and 32B and integrate the lengthwise plates 20 and the widthwise plates 30 into a single body.

In the present embodiment, since silver (Ag) is plated on the plurality of widthwise plates 30 in advance and then brazing is performed, an additional filler metal is not required, and the plurality of widthwise plates 30 and the plurality of lengthwise plates 20 stacked in a three-dimensional lattice structure may be effectively bonded to each other. In addition, a bus bar having improved electrical conductivity with the silver plating layers 32A and 32B may be obtained.

Finally, by processing holes H at both ends of the bus bar multi-layer 200 in which the lengthwise plates 20 and the widthwise plates 30 are integrated into a single body by the brazing welding, the bus bar may be completed.

Meanwhile, the battery pack according to the present disclosure may be configured to include at least one of the above-described bus bars. The battery pack may further include, in addition to the bus bar, battery modules electrically connected by the bus bar, and various devices for controlling charging and discharging of the battery modules, such as a BMS (Battery Management System), a relay, a current sensor, a fuse, and the like.

The battery pack may be applied to a vehicle such as an electric vehicle or a hybrid vehicle. The battery pack may also be applied to a power storage device or other IT products.

While preferred embodiments of the present disclosure have been illustrated and described, the present disclosure is not limited to the specific preferred embodiments described above, and it will be obvious to anyone with ordinary skill in the art, to which the present disclosure pertains, to make various modifications without departing from the gist of the present disclosure as claimed in the claims, and such modifications are within the scope of the claims.

In the present specification, while terms indicating directions such as up, down, left, right, etc. have been used, it will be obvious to those skilled in the art that these terms are only for convenience of description and may be expressed differently depending on the viewing position of the observer or the location of the object.

## Claims

1. A bus bar, which is a bar-shaped conductor for electrically connecting battery modules or electric parts,
wherein the bus bar has a three-dimensional lattice structure to allow air ventilation and has a plurality of ventilation holes provided in a body of the bus bar.

2. The bus bar of claim 1, wherein the body is provided in a bar shape having a predetermined length, thickness, and width, and
the plurality of ventilation holes are provided in an upper surface, lower surface, left side surface, right side surface, front surface, and back surface of the body and provided to communicate with each other through an inner portion of the body.

3. The bus bar of claim 1, wherein the body comprises:
a plurality of lengthwise plates arranged side by side with a predetermined interval between each other; and
a plurality of widthwise plates arranged in a direction crossing the plurality of lengthwise plates and side by side with a predetermined interval between each other,
wherein the plurality of ventilation holes are formed by alternately repeatedly stacking the plurality of lengthwise plates and the plurality of widthwise plates in a vertical direction.

4. The bus bar of claim 3, wherein at least one of the plurality of lengthwise plates and the widthwise plates are plated with silver (Ag).

5. The bus bar of claim 4, wherein each of the plurality of lengthwise plates is formed of a non-plated copper plate, and
each of the plurality of widthwise plates is formed of a copper plate having both sides plated with silver (Ag).

6. The bus bar of claim 4, wherein the plurality of lengthwise plates and the plurality of widthwise plates are welded by brazing welding.

7. A method of manufacturing a bus bar, the method comprising:
preparing a material comprising a plurality of lengthwise plates having the same length as a length of the bus bar and a plurality of widthwise plates having the same length as a width of the bus bar;
forming a bus bar unit layer by arranging the plurality of lengthwise plates side by side with a predetermined interval therebetween, and stacking the plurality of widthwise plates on the plurality of lengthwise plates side by side with a predetermined interval therebetween in a direction crossing the plurality of lengthwise plates;
forming a bus bar multi-layer by repeatedly stacking the bus bar unit layer a preset number of times; and
welding the bus bar multi-layer to integrate the bus bar multi-layer into a single body.

8. The method of claim 7, further comprising a hole processing operation of forming holes at both ends of the bus bar in a thickness direction after the welding.

9. The method of claim 7, wherein the lengthwise plates comprise a non-plated copper plate, and the widthwise plates comprise a silver (Ag)-plated copper layer, and
in the welding, brazing welding is performed, in which the bus bar multi-layer is integrated into a single body by melting a silver component of the widthwise plates without using an additional filler metal.

10. A battery pack comprising the bus bar according to any one of claims 1 through 6.
